# EUROPÄISCHE PATENTSCHRIFT

(11) **EP 1 409 434 B1**
(45) Veröffentlichungstag und Bekanntmachung des Hinweises auf die Patenterteilung: **13.02.2008**
(21) Anmeldenummer: 02764751.0
(22) Anmeldetag: 23.07.2002
(51) Int. Cl.: C04B 41/00, C09D 5/00

(54) **STRUKTURVISKOSE KLARLACK-SLURRY, VERFAHREN ZU IHRER HERSTELLUNG UND IHRE VERWENDUNG**
STRUCTURALLY VISCOSE CLEAR LACQUER SLURRY
VERNIS INCOLORE A VISCOSITE INTRINSEQUE SE PRESENTANT SOUS LA FORME D'UNE PATE, SON PROCEDE DE PRODUCTION ET SON UTILISATION

(30) Priorität: 24.07.2001 DE 10135997
(43) Veröffentlichungstag der Anmeldung: 21.04.2004
(73) Patentinhaber: BASF Coatings AG, 48165 Münster (DE)
(72) Erfinder: WOLTERING, Joachim, 48159 Münster (DE); TECKLENBORG, Michael, 48317 Drensteinfurt (DE); OTT, Günther, 48167 Münster (DE)
(74) Vertreter: Leifert & Steffan
(86) Internationale Anmeldenummer: PCT/EP2002/008168
(87) Internationale Veröffentlichungsnummer: WO 2003/010115

(56) Entgegenhaltungen:
- EP-A- 1 186 640
- CH-A- 636 328
- FR-A- 2 399 988
- US-A- 4 006 030

## Beschreibung

Die vorliegende Erfindung betrifft eine neue strukturviskose Klarlack-Slurry. Außerdem betrifft die vorliegende Erfindung ein neues Verfahren zur Herstellung strukturviskoser Klarlack-Slurries. Des weiteren betrifft die vorliegende Erfindung die Verwendung der neuen strukturviskosen Klarlack-Sluny für die Automobilerstlackierung, die Automobilreparaturlackierung, die Lackierung von Bauwerken im Innen-und Außenbereich, die Lackierung von Türen, Fenstern und Möbeln sowie die industrielle Lackierung, inklusive Coil Coating, Container Coating, die Kleinteilelackierung, die Imprägnierung und/oder Beschichtung elektrotechnischer Bauteile und die Lackierung von weißer Ware. Nicht zuletzt betrifft die vorliegende Erfindung die Verwendung der neuen Klarlack-Slurries als Klebstoffe und Dichtungsmassen zur Herstellung von Klebschichten und Dichtungen, insbesondere auf den vorstehend genannten Gebieten.

Thermisch härtbare Klarlack-Slurries, die mit Hilfe von Mahl- und Dispergierverfahren hergestellt werden, sind beispielsweise aus der deutschen Patentanmeldung DE 195 40 977 A1 bekannt. Ebenso sind mit aktinischer Strahlung härtbare Klarlack-Slurries, die mit Hilfe von Mahl- und Dispergierverfahren hergestellt werden, aus der deutschen Patentanmeldung DE 198 35 206 A1 bekannt.

Hier und im folgenden ist unter aktinischer Strahlung elektromagnetische Strahlung, wie nahes Infrarot (NIR), sichtbares Licht, UV-Strahlung oder Röntgenstrahlung, insbesondere UV-Strahlung, und Korpuskularstrahlung, wie Elektronenstrahlung, zu verstehen.

Thermisch härtbare Klarlack-Slurries, die mit Hilfe von Sekundärdispersionsverfahren hergestellt werden, sind beispielsweise aus dem deutschen Patent DE 198 41 842 C2, der deutschen Patentanmeldung DE 196 17 086 A1 oder der europäischen Patentanmeldung EP 0 899 282 A1 bekannt oder sie werden in der nicht vorveröffentlichten deutschen Patentanmeldung DE 100 55 464.4 beschrieben.

Beispielsweise sind die aus dem deutschen Patent DE 198 41 842 C2 bekannten Klarlack-Slurries von organischen Lösemitteln und externen Emulgatoren frei und enthalten feste sphärische Partikel einer mittleren Teilchengröße von 0,8 bis 20 µm und einer maximalen Teilchengröße von 30 µm, wobei sie einen Gehalt an Ionen bildenden Gruppen von 0,05 bis 1 meq/g und einen Gehalt an Neutratisationsmitteln von 0,05 bis 1 meq/g aufweisen.

Die Partikel der in der nicht vorveröffentlichten deutschen Patentanmeldung DE 100 55 464.4 beschriebenen Klarlack-Slurry weisen eine mittleren Teilchengröße von 1,0 bis 20 µm auf, wobei mindestens 99% der Partikel eine Teilchengröße <30 µm haben. Sie enthalten als Bindemittel mindestens ein Polyol mit einer OH-Zahl >110 mg KOH/g, das potentiell ionische Gruppen aufweist. Die Klarlack-Slurry hat insgesamt einen Gehalt an potentiell ionischen Gruppen von 0,05 bis 1 meq/g Festkörper sowie bei einem Neutralisationsgrad von höchstens 50% einen Gehalt an durch Neutralisation der potentiell ionischen Gruppen erzeugten ionischen Gruppen von 0,005 bis 0,1 meq/g Festkörper.

Diese bekannten strukturviskosen Klarlack-Slurries haben eine Viskosität von
(i) 50 bis 1000 mPas bei einer Scherrate von 1.000 s⁻¹,
(ii) 150 bis 8.000 mPas bei einer Scherrate von 10 s⁻¹ und
(iii) 180 bis 12.000 mPas bei einer Scherrate von 1 s⁻¹.

Bei dem Sekundärdispersionsverfahren werden die Klarlack-Slurries durch
1) Emulgieren einer organischen Lösung, enthaltend Bindemittel und Vernetzer, in Wasser bzw. einer wäßrigen Phase wodurch eine Emulsion vom Typ Öl-in-Wasser resultiert,
2) Entfernen des organischen Lösemittels oder der organischen Lösemittel und
3) teilweisen oder völligen Ersatz des entfernten Lösemittelvolumens durch Wasser, wodurch eine Klarlack-Slurry mit festen sphärischen Partikeln resultiert,
hergestellt, wobei den Klarlack-Slurries
4) noch mindestens ein ionischer, insbesondere anionischer, Verdicker und mindestens ein nicht ionischer Assoziativ-Verdicker zugesetzt werden.

Aus der deutschen Patentanmeldung DE 199 08 018 A1 sind thermisch und mit aktinischer Strahlung härtbare (Dual-Cure-)Klarlack-Slurries bekannt, die nach dem Sekundärdispersionsverfahren hergestellt werden.

Aus der deutschen Patentanmeldung DE 199 59 923 A1 sind Klarlack-Slurries bekannt, die durch ein Primärdispersionsverfahren hergestellt werden. Bei diesem Verfahren werden die Pulverklarlack-Partikel durch kontrollierte radikalische Copolymerisation von olefinisch ungesättigten Monomeren in einer Mikro- oder einer Miniemulsion direkt hergestellt.

In den internationalen Patentanmeldungen WO 97/45476, WO 98/45356 oder WO 00/17256, dem amerikanischen Patent US 4,056,653 A oder in den nicht vorveröffentlichten deutschen Patentanmeldungen DE 100 06 673.9 oder DE 100 18 581.9 werden thermisch oder thermisch und mit aktinischer Strahlung härtbare Klarlack-Slurries beschrieben, die mit Hilfe von Schmelzeemulgierverfahren hergestellt werden.

Die bekannten Klarlack-Slurries weisen sehr gute anwendungstechnische Eigenschaften auf und sind sehr gut für die Herstellung von Klarlackierungen für hochwertige farb- und/oder effektgebende Mehrschichtlackierungen geeignet, wie sie beispielsweise für die Beschichtung von Automobilen eingesetzt werden. Dabei können Sie bei der Herstellung dieser farb- und/oder effektgebenden Mehrschichtlackierungen nach dem Naß-in-naß-Verfahren in Kombination mit den unterschiedlichsten Wasserbasislacken eingesetzt werden, ohne daß es zu so nachteiligen Effekten, wie Rißbildung (mud cracking), kommt.

Die bekannten Klarlack-Slurries weisen aber den Nachteil auf, daß sie manchmal Klarlackierungen mit Mikrostörungen liefern. Diese Mikrostörungen machen sich vor allem auf schwarzen Basislackierungen durch optische Effekte, die an Metallic-Effekte erinnern, bemerkbar. Diese optischen Effekte werden auch als »Sternenhimmel« bezeichnet.

Aufgabe der vorliegenden Erfindung ist es, eine neue Klarlack-Slurry zur Verfügung zu stellen, welche die Nachteile des Standes der Technik nicht mehr länger aufweist, sondern die unter Wahrung aller Vorteile der bekannten Klarlack-Slurries Klarlackierungen liefert, die keine Mikrostörungen, insbesondere keine störenden optischen Effekte, wie »Sternenhimmel« mehr aufweisen.

Demgemäß wurde die neue strukturviskose Klarlack-Slurry gefunden, enthaltend feste und/oder hochviskose, unter Lagerungs- und Anwendungsbedingungen dimensionsstabile Partikel und mindestens ein wasserlösliches Salz, das rückstandsfrei oder im wesentlichen rückstandsfrei zersetzbar ist.

Im folgenden wird die neue strukturviskose Klarlack-Slurry als "erfindungsgemäße Slurry" bezeichnet.

Weitere Erfindungsgegenstände gehen aus der Beschreibung hervor.

Im Hinblick auf den Stand der Technik war es für den Fachmann überraschend und nicht vorhersehbar, daß die der vorliegenden Erfindung zugrundeliegende Aufgabe dadurch gelöst werden konnte, daß der kontinuierlichen, d. h. der wäßrigen, Phase der erfindungsgemäßen Slurry mindestens ein speziell ausgewähltes Salz zugesetzt wurde. Insbesondere überraschte, daß die erfindungsgemäß bezweckte Verbesserung gerade durch die Verwendung von Salzen erzielt wurde, da Salze im allgemeinen von Lackfachleuten als destabilisierend angesehen werden. Noch mehr überraschte, daß die erfindungsgemäß zu verwendenden Salze bei einer Reihe unterschiedlicher Klarlack-Slurries die erfindungsgemäß bezweckte Verbesserung hervorriefen.

Die erfindungsgemäßen Slurries können von unterschiedlicher Zusammensetzung sein. So kommen beispielsweise
- die aus den deutschen Patentanmeldungen DE 195 40 977 A1 oder DE 19832 2 06 A1 bekannten, mit Hilfe von Mahl- und Dispergierverfahren hergestellten, thermisch oder mit aktinischer Strahlung härtbaren Klarlack-Slurries,
- die aus der deutschen Patentanmeldung DE 199 59 923 A1 bekannten, mit Hilfe von Primärdispersionsverfahren hergestellten, thermisch oder thermisch und mit aktinischer Strahlung härtbaren Klarlack-Slurries,
- die aus den internationalen Patentanmeldungen WO 97/45476, WO 98/45356 oder WO 00/17256 oder den amerikanischen Patent US 4,056,653 A bekannten oder in den nicht vorveröffentlichten deutschen Patentanmeldungen DE 100 06 673.9 oder DE 100 18 581.9 beschriebenen thermisch oder thermisch und mit aktinischer Strahlung härtbaren Klarlack-Slurries, die mit Hilfe von Schmelzeemulgierverfahren hergestellt werden, oder
- die aus den deutschen Patentanmeldungen DE 198 41 842 A1, DE 196 17 086 A1 oder DE 199 08 018 A1 oder der europäischen Patentanmeldung EP 0 899 282 A1 bekannten oder die in der vorveröffentlichten deutschen Patentanmeldung DE 100 55 464.4 beschriebenen, mit Hilfe von Sekundärdispersionsverfahren hergestellten, thermisch oder thermisch und mit aktinischer Strahlung härtbaren Klarlack-Slurries
als Basis für die erfindungsgemäßen Slurries in Betracht.

Von diesen sind die aus den deutschen Patentanmeldungen DE 198 41 842 A1 oder DE 199 08 018 A1 bekannten oder die in der nicht vorveröffentlichten deutschen Patentanmeldung DE 100 55 464.4 beschriebenen, mit Hilfe von Sekundärdispersionsverfahren hergestellten, thermisch oder thermisch und mit aktinischer Strahlung härtbaren, von externen Emulgatoren und organischen Lösemitteln freien oder im wesentlichen freien Klarlack-Slurries von Vorteil und werden daher erfindungsgemäß bevorzugt eingesetzt. Hiervon weisen die in der nicht vorveröffentlichten deutschen Patentanmeldung DE 100 55 464.4 beschriebenen Klarlack-Slurries weitere besondere Vorteile auf und werden daher erfindungsgemäß besonders bevorzugt angewandt.

Ganz besonders bevorzugt sind die nach dem Sekundärdispersionsverfahren hergestellten Klarlack-Slurries, die die nachstehend beschriebenen speziellen Methacrylatcopolymerisate als Bindemittel in den dimensionsstabilen Partikeln enthalten.

Die erfindungsgemäße Slurry enthält als erfindungswesentlichen Bestandteil mindestens ein, insbesondere ein, wasserlösliches Salz vorzugsweise in einer Menge von 0,1 bis 50 mmol pro 1.000 g an in der erfindungsgemäßen Slurry enthaltenem Wasser. Bevorzugt werden 0,2 bis 40, besonders bevorzugt 0,3 bis 30, ganz besonders bevorzugt 0,4 bis 20, insbesondere 0,5 bis 10 und speziell 0,5 bis 8 mmol/1.000 g Wasser verwendet.

Das Salz ist rückstandsfrei oder im wesentlichen rückstandsfrei zersetzbar. Dies bedeutet, daß es bei seiner Zersetzung keine Rückstände oder Rückstände in einer Menge bildet, die nachteilige technische Effekte in den erfindungsgemäßen Klarlackierungen hervorruft.

Das Salz kann mit Hilfe von Hitze und/oder aktinischer Strahlung zersetzbar sein. Vorzugsweise ist es thermisch zersetzbar. Bevorzugt ist es unter den Bedingungen der Härtung der aus den erfindungsgemäßen Slurries hergestellten erfindungsgemäßen Klarlackschichten zersetzbar. Erfindungsgemäß ist es von Vorteil, wenn das Salz bei Temperaturen oberhalb 100 °C zersetzbar ist. Vorzugsweise ist die Zersetzung des Salzes bei 250, bevorzugt 200, besonders bevorzugt 1.90 und insbesondere 180 °C beendet.

Bei der Zersetzung des Salzes können sich die unterschiedlichsten organischen, anorganischen und metallorganischen Zersetzungsprodukte bilden. So kann es sich bei den Zersetzungsprodukten um flüchtige Elemente, neutrale organische oder anorganische Wasserstoffverbindungen, organische und anorganische Basen, organische und anorganische Säuren oder Oxide handeln.

Beispiele für flüchtige Elemente sind Phosphor, Schwefel, Stickstoff oder Sauerstoff, insbesondere Stickstoff.

Beispiele für neutrale organische und anorganische Wasserstoffverbindungen sind Wasser oder Kohlenwasserstoffe, insbesondere Wasser.

Beispiele für organische und anorganische Basen sind Ammoniak, Methylamin, Dimethylamin oder Trimethylamin, insbesondere Ammoniak.

Beispiele für organische und anorganische Säuren sind Ameisensäure, Essigsäure, Propionsäure, Oxalsäure, Zitronensäure, Weinsäure, Salzsäure, Bromwasserstoff, Phosphorsäure, phosphorige Säure, Amidosulfonsäure, Schwefelsäure, schwefelige Säure, Thioschwefelsäure, HSCN oder Schwefelwasserstoff, insbesondere Essigsäure.

Beispiele für Oxide sind Kohlendioxid, Schwefeldioxid, Schwefeltrioxid oder Phosphoroxide, insbesondere Kohlendioxid.

Vorzugsweise wird ein Salz ausgewählt, dessen Zersetzungsprodukte nicht oder nur geringfügig toxisch und/oder nicht korrosiv oder nur geringfügig korrosiv sind. Bevorzugt wird in ein Salz ausgewählt, das als Zersetzungsprodukte Wasser, Stickstoff, Kohlendioxid, Ammoniak und organische Säuren bildet.

Besonders bevorzugt wird das Salz aus der Gruppe der Ammoniumsalze, ganz besonders bevorzugt aus der Gruppe, bestehend aus Salzen von Ammoniak und von organischen Aminen mit organischen und anorganischen Säuren, ausgewählt.

Insbesondere wird das Ammoniumsalz aus der Gruppe bestehend aus Ammoniumcarbonat, Ammoniumrhodanid, Ammoniumsulfamat, Ammoniumsulfitmonohydrat, Ammoniumformiat, Ammoniumacetat, Ammoniumhydrogenoxalatmonohydrat, Diammoniumoxalatmonohydrat, Ammoniumcitrat und Ammoniumtartrat ausgewählt. Von diesen sind wiederum Ammoniumcarbonat und Ammoniumacetat ganz besonders vorteilhaft und werden deshalb erfindungsgemäß ganz besonders bevorzugt verwendet.

Die erfindungsgemäße Slurry enthält dimensionsstabile Partikel. Im Rahmen der vorliegenden Erfindung bedeutet "dimensionsstabil", daß die Partikel unter den üblichen und bekannten Bedingungen der Lagerung und der Anwendung von Klarlack-Slurries, wenn überhaupt, nur geringfügig agglomerieren und/oder in kleinere Teilchen zerfallen, sondern auch unter dem Einfluß von Scherkräften im wesentlichen ihre ursprünglichen Form bewahren. Dabei können die Partikel hochviskos und/oder fest sein. Vorzugsweise sind die dimensionsstabilen Partikel fest.

Für die erfindungsgemäße Slurry ist es vorteilhaft, wenn die mittlere Teilchengröße der Partikel bei 1 bis 20 µm und besonders bevorzugt bei 3 bis 15 µm liegt. Unter mittlerer Teilchengröße wird der nach der Laserbeugungsmethode ermittelte 50%-Medianwert verstanden, d.h., 50% der Partikel haben einen Teilchendurchmesser < dem Medianwert und 50% der Partikel einen Teilchendurchmesser ≥ dem Medianwert. Dabei haben vorzugsweise mindestens 99% der Partikel eine Teilchengröße <30 µm.

Slurries mit derartigen mittleren Teilchengrößen und einem Lösemittelgehalt von < 1% weisen ein besseres Applikationsverhalten auf und zeigen bei den applizierten Schichtdicken von > 30 µm, wie sie derzeitig in der Automobilindustrie bei der Endlackierung von Automobilen praktiziert werden, eine deutlich geringere Neigung zu Kochern und zum "mudcracking" als herkömmliche Klarlack-Slurries.

Die Teilchengröße findet ihre obere Begrenzung dann, wenn die Partikel aufgrund ihrer Größe beim Einbrennen nicht mehr vollständig verlaufen können, und damit der Filmverlauf negativ beeinflußt wird. In Fällen geringerer Ansprüche an das Aussehen kann sie jedoch auch höher liegen. Als Obergrenze werden 30 µm für sinnvoll erachtet, da ab dieser Teilchengröße mit einer Verstopfung der Sprühdüsen und Spülkanäle der hochempfindlichen Applikationsapparaturen zu rechnen ist.

Die erfindungsgemäße Slurry ist vorzugsweise im wesentlichen oder völlig frei von organischen Lösemitteln. Im Rahmen der vorliegenden Erfindung bedeutet dies, daß sie einen Restgehalt an flüchtigen Lösemitteln von bevorzugt < 3 Gew.-%, besonders bevorzugt < 2 Gew.-% und ganz besonders bevorzugt < 1 Gew.-% hat.

Vorzugsweise ist die erfindungsgemäße Slurry im vorstehend genannten Sinne im wesentlichen oder völlig frei von externen Emulgatoren (zu »Emulgatoren« vgl. Johan Bieleman, »Lackadditive«, Seiten 160 bis 100, »Grenzflächenaktive Verbindungen«), Hiervon sind die alkoxylierten C₁₆-C₁₈-Fettalkohole ausgenommen, die den erfindungsgemäßen Slurries vorzugsweise bei ihrer Herstellung durch das Sekundärdispersionsverfahren über die organische Lösung der Bestandteile oder über die wäßrige Phase zugesetzt werden.

Die vorstehend beschriebenen bevorzugten Teilchengrößen können auch ohne Zuhilfenahme von zusätzlichen externen Emulgatoren erhalten werden, wenn die erfindungsgemäße Slurry einen Gehalt an potentiell ionischen Gruppen von 0,05 bis 1, vorzugsweise 0,05 bis 0,9 bevorzugt 0,05 bis 0,8, besonders bevorzugt 0,05 bis 0,7 und insbesondere 0,05 bis 0,6 meq/g Festkörper hat. Vorzugsweise wird die Menge an Neutralisationsmitteln so gewählt, daß der Neutralisationsgrad bei 100%, bevorzugt unter 80%, besonders bevorzugt unter 60% und insbesondere unter 50% liegt.

Die chemische Natur des Bindemittels ist in dieser Hinsicht in der Regel nicht beschränkend, solange hierin Ionen bildende Gruppen enthalten sind, die über eine Neutralisation in Salzgruppen überführbar sind und dadurch eine ionische Stabilisierung der Partikel in Wasser übernehmen können.

Als Anionen bildende Gruppen kommen Säuregruppen wie Carbonsäure-, Sulfonsäure- oder Phosphonsäuregruppen, insbesondere Carbonsäuregruppen, in Betracht. Demgemäß werden als Neutralisationsmittel Basen, wie Alkalimetallhydroxide, Ammoniak oder Amine verwendet. Alkalimetallhydroxide sind nur inbeschränktem Maße einsetzbar, da die Alkalimetallionen beim Einbrennen nicht flüchtig sind und durch ihre Unverträglichkeit mit organischen Stoffen den Film trüben und zu Glanzverlusten führen können. Daher sind Ammoniak oder Amine bevorzugt. Im Falle von Aminen werden tertiäre Amine bevorzugt. Beispielhaft seien N,N-Dimethylethanolamin oder Aminomethylpropanolamin (AMP) genannt.

Als Kationen bildende Gruppen kommen primäre, sekundäre oder tertiäre Amine in Betracht. Demgemäß werden als Neutralisationsmittel insbesondere niedermolekulare organische Säuren wie Ameisensäure, Essigsäure, Dimethylolpropionsäure oder Milchsäure verwendet.

Für den bevorzugten Einsatz der erfindungsgemäßen Slurry in der Automobildecklackierung als unpigmentierte Klarlacke werden Polymere oder Oligomere mit Säuregruppen als Ionen bildende Gruppen bevorzugt, da diese sogenannten anionischen Bindemittel in der Regel eine bessere Resistenz gegen Vergilbung als die Klasse der kationischen Bindemittel aufweisen.

Doch kationische Bindemittel mit in Kationen überführbaren Gruppen wie Aminogruppen sind prinzipiell ebenfalls verwendbar, sofern das Einsatzgebiet deren typische Nebeneigenschaften wie ihre Neigung zur Vergilbung verkraftet.

Beispiele für geeignete Bindemittel sind statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, ,,Bindemittel", verwiesen.

Beispiele geeigneter (Co)Polymerisate sind (Meth)Acrylat(co)polymerisate oder partiell verseifte Polyvinylester, insbesondere (Meth)Acrylatcopolymerisate.

Beispiele geeigneter Polyadditionsharze und/oder Polykondensationsharze sind Polyester, Alkyde, Polyurethane, Polylactone, Polycarbonate, Polyether, Epoxidharze, Epoxidharz-Amin-Addukte, Polyharnstoffe, Polyamide, Polyimide, Polyester-Polyurethane, Polyether-Polyurethane oder Polyester-Polyether-Polyurethane ;

Diese Oligomere und Polymere sind dem Fachmann bekannt, und zahlreiche geeignete Verbindungen sind am Markt erhältlich.

Erfindungsgemäß sind die (Meth)Acrylatcopolymerisate, die Polyester, die Alkydharze, die Polyurethane und/oder die acrylierten Polyurethane von Vorteil und werden deshalb bevorzugt verwendet.

Gut geeignete (Meth)Acrylatcopolymerisate und Verfahren zu ihrer Herstellung werden beispielsweise in der deutschen Patentanmeldung DE 199 08 018 A1,Seite 9, Zeile 44, bis Seite 10, Zeile 53, in der europäischen Patentanmeldung EP 0 767 185 A1, den deutschen Patenten DE 22 14 650 B1 oder DE 27 49 576 B1 und den amerikanischen Patenten US 4,091,048 A, US 3,781,379 A, US 5,480,493 A, US 5,475,073 A oder US 5,534,598 A oder in dem Standardwerk Houben-Weyl, Methoden der organischen Chemie, 4. Auflage, Band 14/1, Seiten 24 bis 255, 1961, beschrieben. Als Reaktoren für die Copolymerisation kommen die üblichen und bekannten Rührkessel, Rührkesselkaskaden, Rohrreaktoren, Schlaufenreaktoren oder Taylorreaktoren, wie sie beispielsweise in den Patentanmeldungen DE 1 071 241 B1, EP 0 498 583 A1 oder DE 198 28 742 A1 oder in dem Artikel von K. Kataoka in Chemical Engineering Science, Band 50, Heft 9, 1995, Seiten 1409 bis 1416, beschrieben werden, in Betracht.

Gut geeignete Polyester und Alkydharze sowie ihre Herstellung werden beispielsweise in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, sowie in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, beschrieben.

Gut geeignete Polyurethane und/oder acrylierte Polyurethane sowie ihre Herstellung werden beispielsweise in den Patentschriften EP 0 708 788 A1, DE 44 01 544 A1 oder DE 195 34 361 A1 beschrieben.

Ganz besondere Vorteile resultieren für die erfindungsgemäßen Slurries, wenn ihre dimensionsstabilen Partikel als Bindemittel mindestens ein Methacrylatcopolymerisat enthalten, das, bezogen auf ein gegebenes Methacrylatcopolymerisat, mindestens 90, vorzugsweise mindestens 95 und insbesondere mindestens 99 Gew.-% Methacrylatcomonomere, inklusive potentiell ionische Gruppen enthaltende Methacrylatcomonomere, einpolymerisiert enthält.

Vorzugsweise handelt es sich bei den potentiell ionische Gruppen enthaltenden (Meth)Acrylatcomonomeren um Acrylsäure, beta-Carboxyethylacrylat und/oder Methacrylsäure, insbesondere Methacrylsäure. Vorzugsweise werden die potentiell ionische Gruppen enthaltenden (Meth)Acrylatcomonomeren in einer Menge in die Methacrylatcopolymerisate einpolymerisiert, daß der vorstehend beschriebene Gehalt der Partikel an potentiell ionischen Gruppen problemlos eingestellt werden kann. Vorzugsweise werden sie in einer Menge von 0,1 bis 3, bevorzugt 0,2 bis 2,8, besonders bevorzugt 0,3 bis 2,6, ganz besonders bevorzugt 0,4 bis 2,4 und insbesondere 0,5 bis 2,2 Gew.-%, jeweils bezogen auf ein gegebenes Methacrylatcopolymerisat, in die Methacrylatcopolymerisate einpolymerisiert.

Vorzugsweise weisen die Methacrylatcopolymerisate eine Glasübergangstemperatur Tg von maximal 50 °C auf; dabei soll die Glasübergangstemperatur Tg vorzugsweise 0,bevorzugt 10 und insbesondere 20 °C nicht unterschreiten.

Vorzugsweise wird die Glasübergangstemperatur Tg der Methacrylatcopolymerisate über mindestens ein von reaktiven funktionellen Gruppen und von potentiell ionischen Gruppen freies Methacrylatcomonomer eingestellt. Bevorzugt wird die Glasübergangstemperatur Tg über mindestens zwei, insbesondere zwei, von reaktiven funktionellen Gruppen und von potentiell ionischen Gruppen freien Methacrylatcomonomeren eingestellt. Vorzugsweise weichen die Glasübergangstemperaturen Tg der jeweiligen Homopolymerisate der von reaktiven funktionellen Gruppen und von potentiell ionischen Gruppen freien Methacrylatcomonomeren um maximal 40 °C voneinander ab.

Beispiele geeigneter von reaktiven funktionellen Gruppen und von potentiell ionischen Gruppen freien Methacrylatcomonomeren sind Methyl-, Ethyl-, n-Propyl-, n-Butyl-, i-Butyl-, tert.-Butyl-, n-Pentyl-, Isoamyl-, Cyclopentyl-, n-Hexyl- und Cyclohexylmethacrylat. Von diesen sind i-Butylmethacrylat (Glasübergangstemperatur Tg des Homopolymerisats: 53 °C) und n-Butylmethacrylat (Glasübergangstemperatur Tg des Homopolymerisats: 20 °C) von Vorteil und werden deshalb besonders bevorzugt verwendet.

Die Menge der in die bevorzugt zu verwendenden Methacrylatcopolymerisate einpolymerisierten, von reaktiven funktionellen Gruppen und von potentiell ionischen Gruppen freien Methacrylatcomonomeren kann breit variieren. Wesentlich ist, daß die Menge so gewählt wird, daß die resultierenden Methacrylatcopolymerisate die vorstehend beschriebenen Glasübergangstemperatur Tg aufweisen. Vorzugsweise liegt die Menge bei mindestens 50, bevorzugt mindestens 55, besonders bevorzugt mindestens 60, ganz besonders bevorzugt mindestens 65 und insbesondere mindestens 70 Gew.-%, jeweils bezogen auf ein gegebenes Methacrylatcopolymerisat.

Dabei kann das Gewichtsverhältnis der besonders bevorzugt verwendeten Methacrylatcomonomeren n-Butylmethacrylat und i-Butylmethacrylat breit variieren. Vorzugsweise liegt das Gewichtsverhältnis n : i bei 10 : 1 bis 1 :, bevorzugt 8 : 1 bis 1 : 4, besonders bevorzugt 6 : 1 bis 1 : 2, ganz besonders bevorzugt 5: 1 bis 1 :1,5 und insbesondere 4 : 1 bis 1 : 1.

Handelt es sich bei den erfindungsgemäßen Slurries um physikalisch härtbare, enthalten die Methacrylatcopolymerisate keine oder nur eine für die Vernetzung unwesentliche Anzahl an reaktiven funktionellen Gruppen.

Handelt es sich bei den erfindungsgemäßen Slurries um thermisch selbstvernetzende, enthalten die Methacrylatcopolymerisate die nachstehend beschriebenen komplementären reaktiven funktionellen Gruppen für die thermische Vernetzung und/oder reaktive funktionelle Gruppen, die "mit sich selbst", d. h. mit Gruppen ihrer eigenen Art, vernetzten können.

Handelt es sich bei den erfindungsgemäßen Slurries um mit aktinischer Strahlung härtbare, können die Methacrylatcopolymerisate reaktive funktionelle Gruppen mit mindestens einer mit aktinischer Strahlung aktivierbaren Bindung enthalten. Diese reaktiven funktionellen Gruppen sind in den Methacrylatcopolymerisaten der mit aktinischer Strahlung härtbaren erfindungsgemäßen Slurries zwingend enthalten, wenn die Slurries keine weiteren strahlenhärtbaren Bestandteile enthalten.

Handelt es sich bei den erfindungsgemäßen Slurries um Dual-Cure-Slurries, enthalten die Methacrylatcopolymerisate reaktive funktionelle Gruppen für die thermische Vernetzung und/oder reaktive funktionelle Gruppen mit mindestens einer mit aktinischer Strahlung aktivierbaren Bindung. Die reaktiven funktionellen Gruppen mit mindestens einer mit aktinischer Strahlung aktivierbaren Bindung sind in den Methacrylatcopolymerisaten der erfindungsgemäßen Dual-Cure-Slurries zwingend enthalten, wenn die Dual-Cure-Slurries keine weiteren strahlenhärtbaren Bestandteile enthalten.

Beispiele geeigneter erfindungsgemäß zu verwendender komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R und R" stehen für gleiche oder verschiedene aliphatische Reste oder sind miteinander zu einem aliphatischen oder heteroaliphatischen Ring verknüpft.

### Übersicht: Beispiele komplementärer reaktiver funktioneller Gruppen

| **Bindemittel und Vernetzungsmittel** | |
|---|---|
| **oder** | |
| **Vernetzungsmittel und Bindemittel** | |
| -SH | -C(O)-OH |
| -NH₂ | -C(O)-O-C(O)- |
| -OH | -NCO |
| -O-(CO)-NH-(CO)-NH₂ | -NH-C(O)-OR |
| -O-(CO)-NH₂ | -CH₂-OH |
| >NH | -CH₂-O-R |
| | -NH-CH₂-O-R |
| | -NH-CH₂-OH |
| | -N(-CH₂-O-R)₂ |
| | -NH-C(O)-CH(-C(O)OR)₂ |
| | -NH-C(O)-CH(-C(O)OR)(-C(O)-R) |
| | -NH-C(O)-NR'R" |
| | > Si(OR)₂ |
| | 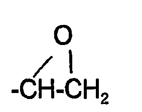 |
| | 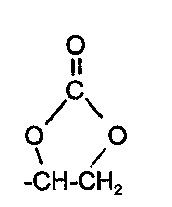 |
| -C(O)-OH | 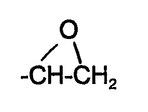 |
| | -C(O)-N(CH₂-CH₂-OH)₂ |

Die Auswahl der jeweiligen komplementären reaktiven funktionellen Gruppen Gruppen richtet sich zum einen danach, daß sie bei der Herstellung der Bindemittel sowie bei der Herstellung, der Lagerung, der Applikation und dem Aufschmelzen der erfindungsgemäßen Slurries keine unerwünschten Reaktionen, insbesondere keine Bildung von Polyelektrolytkomplexen oder vorzeitige Vernetzung, eingehen und/oder die Härtung mit aktinischer Strahlung nicht stören oder inhibieren dürfen, und zum anderen danach, in welchem Temperaturbereich die Vernetzung stattfinden soll.

Vorzugsweise werden bei den erfindungsgemäßen Slurries Vemetzungstemperaturen von 60 bis 180°C angewandt. Es werden daher vorzugsweise Bindemittel mit Thio-, Hydroxyl-, N-Methylolamino- N-Alkoxymethylamino-, Imino-, Carbamat- und/oder Allophanatgruppen, bevorzugt Hydroxylgruppen, einerseits und vorzugsweise Vernetzungsmittel mit Anhydrid-, Epoxy-, blockierten und unblockierten, insbesondere blockierten, Isocyanat-, Urethan-, Methylol-, Methylolether-, Siloxan-, Carbonat-, Amino-, Hydroxy- und/oder beta-Hydroxyalkylamidgruppen, bevorzugt blockierte Isocyanat-, Carbamat-und/oder N-Alkoxymethylaminogruppen, andererseits angewandt.

Im Falle selbstvernetzender erfindungsgemäßer Slurries enthalten die Bindemittel (A) insbesondere Methylol-, Methylolether- und/oder N-Alkoxymethylaminogruppen.

Komplementäre reaktive funktionelle Gruppen, die für die Verwendung in den thermisch fremdvernetzenden erfindungsgemäßen Slurries und den erfindungsgemäßen Dual-Cure-Slurries besonders gut geeignet sind, sind Hydroxylgruppen einerseits und blockierte Isocyanatgruppen andererseits.

Die Funktionalität der Bindemittel bezüglich der vorstehend beschriebenen reaktiven funktionellen Gruppen kann sehr breit variieren und richtet sich insbesondere nach der Vernetzungsdichte, die man erzielen will, und/oder nach der Funktionalität der jeweils angewandten Vernetzungsmittel. Beispielsweise liegt im Falle hydroxylgruppenhaltiger Bindemittel die OH-Zahl vorzugsweise bei 20 bis 300, bevorzugt 40 bis 250, besonders bevorzugt 60 bis 200, ganz besonders bevorzugt 80 bis 190 und insbesondere 90 bis 180 mg KOH/g.

Die vorstehend beschriebenen komplementären reaktiven funktionellen Gruppen können nach den üblichen und bekannten Methoden der Polymerchemie in die Bindemittel eingebaut werden. Dies kann beispielsweise durch den Einbau von Methacrylatcomonomeren, die die entsprechenden reaktiven funktionellen Gruppen tragen, und/oder mit Hilfe polymeranaloger Reaktionen geschehen.

Beispiele geeigneter Methacrylatcomonomeren mit reaktiven funktionellen Gruppen sind Methacrylatcomonomere, welche mindestens eine Hydroxyl-Amino-, Alkoxymethylamino-, Carbamat-, Allophanat- oder Iminogruppe pro Molekül tragen, wie
- Hydroxyalkylester der Methacrylsäure, die sich von einem Alkylenglykol ableiten, das mit der Säure verestert ist, oder die durch Umsetzung der Methacrylsäure mit einem Alkylenoxid wie Ethylenoxid oder Propylenoxid erhältlich sind, insbesondere Hydroxyalkylester der Methacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-oder 4-Hydroxybutylmethacrylat; oder Hydroxycycloalkylester wie 1,4-Bis(hydroxymethyl)cyclohexan-, Octahydro-4,7-methano-1H-inden-dimethanol- oder Methylpropandiolmonomethacrylat; oder Umsetzungsprodukte aus cyclischen Estern, wie z.B. epsilon-Caprolacton und diesen Hydroxyalkylmethacrylaten;
- Umsetzungsprodukte aus Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
- Aminoethylmethacrylat oder N-Methylaminoethylmethacrylat, die auch der Einführung von potentiell ionischen Gruppen dienen können;
- N,N-Di(methoxymethyl)aminoethylmethacrylat oder N,N-Di(butoxymethyl)aminopropylmethacrylat;
- Methacrylsäureamide wie Methcrylsäureamid, N-Methyl-, N-Methylol-, N,N-Dimethylol-, N-Methoxymethyl-, N,N-Di(methoxymethyl)-, N-Ethoxymethyl- und/oder N,N-Di(ethoxyethyl)-methacrylsäureamid;
- Methacryloyloxyethyl-, propyl- oder butylcarbamat oder -allophanat; weitere Beispiele geeigneter Methacrylatcomonomere, welche Carbamatgruppen enthalten, werden in den Patentschriften US 3,479,328 A, US 3,674,838 A, US 4,126,747 A, US 4,279,833 A oder US 4,340,497 A beschrieben;

In untergeordneten Mengen können die reaktiven funktionellen Gruppen für die thermische Vernetzung über sonstige olefinisch ungesättigten Monomere, wie die entsprechenden Acrylate, Allylamin, Allylalkohol oder Polyole, wie Trimethylolpropanmono- oder diallylether oder Pentaerythritmono-, -di- oder -triallylether, eingeführt werden.

Die Bindemittel der erfindungsgemäßen Dual-Cure-Slurries oder die der rein mit aktinischer Strahlung härtbaren erfindungsgemäßen Slurries können im statistischen Mittel mindestens eine, vorzugsweise mindestens zwei, Gruppe(n) mit mindestens einer mit aktinischer Strahlung aktivierbaren Bindung(en) pro Molekül enthalten.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Sfickstoff-, Kohlenstoff-Phosphor -oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte Gruppe eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der hier in Rede stehenden Gruppe vorliegen. Erfindungsgemäß ist es von besonderem Vorteil zwei, insbesondere eine, Doppelbindung zu verwenden.

Das Dual-Cure-Bindemittel enthält im statistischen Mittel mindestens eine der vorstehend beschriebenen mit aktinischer Strahlung aktivierbaren Gruppen. Dies bedeutet, daß die Funktionalität des Bindemittels in dieser Hinsicht ganzzahlig, d.h., beispielsweise gleich zwei, drei, vier, fünf oder mehr ist, oder nicht ganzzahlig, d.h., beispielsweise gleich 2,1 bis 10,5 oder mehr ist. Welche Funktionalität man wählt, richtet sich nach den Anforderungen, die an die jeweiligen Dual-Cure-Slurries gestellt werden.

Werden im statistischen Mittel mehr als eine mit aktinischer Strahlung aktivierbare Gruppe pro Molekül angewandt, sind die Gruppen strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, mit aktinischer Strahlung aktivierbare Gruppen verwendet werden, die sich von zwei, drei, vier oder mehr, insbesondere aber zwei, Monomerklassen ableiten.

Beispiele geeigneter Gruppen sind (Meth)Acrylat-, Ethacrylat-, Crotonat-, Cinnamat-, Vinylether-, Vinylester-, Dicyclopentadienyl-, Norbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl-oder Butenylestergruppen, insbesondere aber Acrylatgruppen.

Vorzugsweise sind die Gruppen über Urethan-, Harnstoff-, Allophanat-, Ester-, Ether- und/oder Amidgruppen, insbesondere aber über Estergruppen, an die jeweiligen Grundstrukturen der Bindemittel gebunden. Üblicherweise geschieht dies durch übliche und bekannte kontinuierliche polymeranaloge Reaktionen wie etwa die Reaktion von seitenständigen Glycidylgruppen mit olefinisch ungesättigten Comonomeren, die eine Säuregruppe enthalten, von seitenständigen Hydroxylgruppen mit den Halogeniden dieser Comonomeren, von Hydroxylgruppen mit Doppelbindungen enhaltenden Isocyanaten wie Vinylisocyanat, Methacryloylisocyanat und/oder 1-(1-Isocyanato-1-methylethyl)-3-(1-methylethenyl)-benzol (TMI® der Firma CYTEC) oder von seitenständigen Isocanatgruppen mit den vorstehend beschriebenen hydroxylgruppenhaltigen Comomomeren.

Es können in den Partikeln indes auch Gemische aus rein thermisch härtbaren und rein mit aktinischer Strahlung härtbaren Bindemitteln angewandt werden.

Verfahren zur Herstellung der bevorzugt zu verwendenden Methacrylatcopolymerisate werden in den vorstehend aufgeführten Patentanmeldungen, Patenten und Literaturstellen beschrieben. Besonders bevorzugt werden die Methacrylatcopolymerisate unter Druck hergestellt.

Der Gehalt der dimensionsstabilen Partikel der erfindungsgemäßen Slurry an den vorstehend beschriebenen Bindemitteln kann breit variieren. Vorzugsweise liegt er im Falle der thermisch fremdvernetzenden oder der thermisch fremdvernetzenden und mit aktinischer Strahlung härtbaren erfindungsgemäßen Slurries bei 5 bis 80, bevorzugt 6 bis 75, besonders bevorzugt 7 bis 70, ganz besonders bevorzugt 8 bis 65 und insbesondere 9 bis 60 Gew.-%, jeweils bezogen auf den Festkörper der erfindungsgemäßen Slurries. Im Falle der physikalisch härtbaren und der mit aktinischer Strahlung härtbaren, insbesondere aber der physikalisch härtbaren, erfindungsgemäßen Slurries kann der Gehalt bis zu 100Gew.-% betragen.

Die dimensionsstabilen Partikel der thermisch oder thermisch und mit aktinischer Strahlung härtbaren erfindungsgemäßen Slurries können Vernetzungsmittel enthalten, die komplementäre reaktive funktionelle Gruppen für die thermische Vernetzung und/oder reaktive funktionelle Gruppen mit mindestens einer mit aktinischer Strahlung aktivierbaren Bindung aufweisen.

Als Vernetzungsmittel sind alle auf dem Gebiet der lichtstabilen Klarlackierungen gebräuchlichen Vernetzungsmittel geeignet. Beispiele geeigneter Vernetzungsmittel sind
- Aminoplastharze, wie sie beispielsweise in Römpp Lexikon Lacke und Druckfarben, Georg Thieme Verlag, 1998, Seite 29, »Aminoharze«, dem Lehrbuch ,,Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff., den Patentschriften US 4 710 542 A1 oder EP 0 245 700 A1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben werden,
- Carboxylgruppen enthaltende Verbindungen oder Harze, wie sie beispielsweise in der Patentschrift DE 196 52 813 A1 oder 198 41 408 A1 beschrieben werden, insbesondere 1,12-Dodecandisäure,
- Epoxidgruppen enthaltende Verbindungen oder Harze, wie sie beispielsweise in den Patentschriften EP 0 299 420 A1, DE 22 14 650 B1, DE 27 49 576 B1, US 4,091,048 A oder US 3,781,379 A beschrieben werden,
- Tris(alkoxycarbonylamino)triazine, wie sie in den Patentschriften US 4 939 213 A, US 5 084 541 A, US 5 288 865 A oder der Patentanmeldung EP 0 604 922 A beschrieben werden,
- blockierte Polyisocyanate, wie sie beispielsweise in den Patentschriften US 4,444,954 A1, DE 196 17 086 A1, DE 196 31 269 A1, EP 0 004 571 A1 oder EP 0 582 051 A1 beschrieben werden, oder
- beta-Hydroxyalkylamide wie N,N,N',N'-Tetrakis(2-hydroxyethyl)adipamid oder N,N,N',N'-Tetrakis(2-hydroxypropyl)adipamid.

Die vorstehend beschriebenen Vernetzungsmittel können einzeln oder als Gemisch aus mindestens zwei Vernetzungsmittel eingesetzt werden. Erfindungsgemäß bieten die blockierten Polyisocyanate und/oder Tris(alkoxycarbonylamino)triazine, insbesondere die blockierten Polyisocyanate, besondere Vorteile und werden deshalb besonders bevorzugt verwendet.

Der Gehalt der dimensionsstabilen Partikel an den Vernetzungsmitteln kann ebenfalls breit variieren und richtet sich in erster Linie nach der Funktionalität und Menge der Bindemittel einerseits und der Funktionalität der Vernetzungsmittel andererseits. Vorzugsweise liegt er bei 10 bis 95, bevorzugt 12 bis 94, besonders bevorzugt 14 bis 93, ganz besonders bevorzugt 16 bis 92 und insbesondere 18 bis 90 Gew.-%, jeweils bezogen auf den Festkörper der erfindungsgemäßen Slurry.

Die dimensionsstabilen Partikel der erfindungsgemäßen Slurry können neben den vorstehend beschriebenen wesentlichen Bestandteilen Additive enthalten, wie sie in Klarlacken üblicherweise verwendet werden. Hierbei ist es wesentlich, daß diese Additive die Glasübergangstemperatur Tg der Bindemittel nicht wesentlich absenken.

Beispiele geeigneter Additive sind von den vorstehend beschriebenen Methacrylatcopolymerisaten verschiedene Polymere, Katalysatoren für die Vernetzung, Entschäumer, Haftvermittler, Additive zur Verbesserung der Untergrundbenetzung, Additive zur Verbesserung der Oberflächenglätte, Mattierungsmittel, Lichtschutzmittel, Korrosionsinhibitoren, Biozide, Flammschutzmittel oder Polymerisationsinhibitoren, insbesondere Photoinhibitoren, wie sie in dem Buch "Lackadditive" von Johan Bielemann, Wiley-VCH, Weinheim, New York, 1998, beschrieben werden.

Darüber hinaus können die dimensionsstabilen Partikel noch von den vorstehend beschriebenen Bindemitteln und Vernetzungsmitteln verschiedene, mit aktinischer Strahlung härtbare Bestandteile als Additive enthalten, wenn die erfindungsgemäße Slurry thermisch und mit aktinischer Strahlung oder mit aktinischer Strahlung alleine härtbar sein soll. Hierbei handelt es sich beispielsweise um
- die in den den europäischen Patentanmeldungen EP 0 928 800 A1, EP 0 636 669 A1 , EP 0 410 242 A1 , EP 0 783 534 A1 , EP 0 650 978 A1 , EP 0 650 979 A , EP 0 650 985 A , EP 0 540 884 A1 , EP 0 568 967 A1, EP 0 054 505 A1 oder EP 0 002 866 A1, den deutschen Patentanmeldungen DE 197 09 467 A1, DE 42 03 278 A1, DE3316593A1, DE 38 36 370 A1, DE 24 36 186 A1 oder DE 20 03 579 B1, den internationalen Patentanmeldungen WO 97/46549 oder WO 99/14254 oder den amerikanischen Patentschriften US 5,824,373 A, US 4,675,234 A, US 4,634,602 A, US 4,424,252 A, US 4,208,313 A, US 4,163,810 A, US 4,129,488 A, US 4,064,161 A oder US 3,974,303 A beschriebenen, zur Verwendung in UV-härtbaren Klarlacken und Pulverklarlacken vorgesehenen Bindemittel;
- mit aktinischer Strahlung härtbare Reaktivverdünner, wie die in Römpp Lexikon Lacke und Druckfarben, Georg Thieme Verlag, Stuttgart, New York, 1998, auf Seite 491 unter dem Stichwort »Reaktivverdünner« beschriebenen; oder um
- Photoinitiatoren, wie sie in Römpp Chemie Lexikon, 9. erweiterte und neubearbeitete Auflage, Georg Thieme Verlag Stuttgart, Bd. 4, 1991, oder in Römpp Lexikon Lacke und Druckfarben, Georg Thieme Verlag Stuttgart, 1998, Seiten 444 bis 446, beschrieben werden.

Die erfindungsgemäße Slurry kann in der wäßrigen Phase ebenfalls Additive enthalten.

Vorzugsweise handelt es sich dabei um nichtionische und/oder ionische Verdicker. Hierdurch wird der Neigung der vergleichsweise großen festen Partikel zur Sedimentation wirksam begegnet.

Beispiele nichtionischer Verdicker sind Hydroxyethylcellulose und Polyvinylalkohole. Sogenannte nichtionische Assoziativ-Verdicker sind in vielfältiger Auswahl ebenfalls am Markt verfügbar. Sie bestehen in der Regel aus wasserverdünnbaren Polyurethanen, die Reaktionsprodukte von wasserlöslichen Polyetherdiolen, aliphatischen Diisocyanaten und monofunktionellen hydroxylischen Verbindungen mit organophilem Rest sind.

Ebenfalls kommerziell erhältlich sind ionische Verdicker. Diese enthalten üblicherweise anionische Gruppen und basieren insbesondere auf speziellen Polyacrylatharzen mit Säuregruppen, die teilweise oder vollständig neutralisiert sein können.

Beispiele geeigneter, erfindungsgemäß zu verwendender Verdicker sind aus dem Lehrbuch "Lackadditive" von Johan Bielemann, Wiley-VCH, Weinheim, New York, 1998, Seiten 31 bis 65, oder der deutschen Patentanmeldung DE 199 08 018 A1 ,Seite 13, Zeile 18, bis Seite 14, Zeile 48, bekannt.

Für die erfindungsgemäße Slurry kann es vorteilhaft sein, wenn beide der vorstehend beschriebenen Verdicker-Typen hierin enthalten sind. In den allermeisten Fällen reicht jedoch ein Verdicker, insbesondere ein nichtionischer Verdicker, aus, um das gewünschte strukturviskose Verhalten einzustellen.

Die Menge der zuzusetzenden Verdicker und, sofern zwei unterschiedliche Verdicker angewandt werden, das Verhältnis von ionischem zu nichtionischem Verdicker richten sich nach der gewünschten Viskosität der erfindungsgemäßen Slurry, die wiederum von der benötigten Absetzstabilität und den speziellen Bedürfnissen der Spritzapplikation vorgegeben werden. Der Fachmann kann daher die Menge der Verdicker und gegebenenfalls das Verhältnis der Verdicker-Typen zueinander anhand einfacher Überlegungen gegebenenfalls unter Zuhilfenahme von Vorversuchen ermitteln.

Vorzugsweise wird ein Viskositätsbereich von 50 bis 1500 mPas bei einer Scherrate von 1000 s⁻¹ und von 150 bis 8000 mPas bei einer Scherrate von 10 s⁻¹ sowie von 180 bis 12000 mPas bei einer Scherrate von 1 s⁻¹ eingestellt.

Dieses als "strukturviskos" bekannte Viskositätsverhalten beschreibt einen Zustand, der einerseits den Bedürfnissen der Spritzapplikation und andererseits auch den Erfordernissen hinsichtlich Lager- und Absetzstabilität Rechnung trägt: Im bewegten Zustand, wie beispielsweise beim Umpumpen der erfindungsgemäßen Slurry in der Ringleitung der Lackieranlage und beim Versprühen, nimmt die erfindungsgemäße Slurry einen niederviskosen Zustand ein, der eine gute Verarbeitbarkeit gewährleistet. Ohne Scherbeanspruchung hingegen steigt die Viskosität an und gewährleistet auf diese Weise, daß der bereits auf dem zu lackierenden Substrat befindliche Lack eine verringerte Neigung zum Ablaufen an senkrechten Flächen zeigt ("Läuferbildung"). In gleicher Weise führt die höhere Viskosität im unbewegten Zustand, wie etwa bei der Lagerung, dazu, daß ein Absetzen der festen Partikel größtenteils verhindert wird oder ein Wiederaufrühren der während der Lagerzeit nur schwach abgesetzten erfindungsgemäßen Slurry gewährleistet ist.

Die wäßrige Phase der erfindungsgemäßen Slurry kann des weiteren im Film einvernetzbare Verlaufhilfsmittel, enthalten. Beispiele geeigneter Bestandteile dieser Art sind thermisch härtbare Reaktivverdünner wie stellungsisomere Diethyloctandiole oder Hydroxylgruppen enthaltende hyperverzweigte Verbindungen oder Dendrimere wie sie in den deutschen Patentanmeldungen DE 198 05 421 A1, DE 198 09 643 A1 oder DE 198 40 405 A1 beschrieben werden.

Desweiteren kann die wäßrige Phase der erfindungsgemäßen Slurry noch alkoxylierte, insbesondere ethoxylierte, C₁₆-C₁₈-Fettalkohole mit mehr als 20 Oxaalkandiyl-Gruppen im Molekül enthalten, wie sie beispielsweise von der Firma BASF-Aktiengesellschaft unter der Marke Lutensol ® AT 50 vertrieben werden.

Vorzugsweise wird die erfindungsgemäße Slurry durch das aus der deutschen Patentanmeldung DE 199 08 018 A1 oder aus dem deutschen Patent DE 198 41 842 C2 oder in der nicht vorveröffentlichten deutschen Patentanmeldung 100 55 464.4 beschriebene Sekundärdispersionsverfahren hergestellt.

Bei diesem Verfahren werden die ionisch stabilisierbaren Bindemittel und die Vernetzungsmittel sowie gegebenenfalls die Additive in organischer Lösung gemischt und zusammen mit Hilfe von Neutralisationmitteln in Wasser emulgiert. Sodann wird mit Wasser unter Rühren verdünnt. Es bildet sich zunächst eine Wasser-in-Öl-Emulsion aus, die bei weiterer Verdünnung in eine Öl-in-Wasser-Emulsion umschlägt. Dieser Punkt wird im allgemeinen bei Festkörpergehalten von < 50 Gew.-%, bezogen auf die Emulsion, erreicht und ist äußerlich an einem stärkeren Abfall der Viskosität während der Verdünnung erkennbar.

Die Öl-in-Wasser-Emulsion kann auch direkt durch die Schmelzeemulgierung der Bindemittel und der Vernetzungsmittel sowie gegebenenfalls der Additive in Wasser hergestellt werden.

Die so erhaltene, noch lösemittelhaltige Emulsion wird anschließend durch azeotrope Destillation von Lösemitteln befreit.

Erfindungsgemäß ist es von Vorteil, wenn die zu entfernenden Lösemittel bei einer Destillationstemperatur unterhalb 70°C, bevorzugt unterhalb 50°C und insbesondere unterhalb 40°C abdestilliert werden. Gegebenenfalls wird der Destillationsdruck hierbei so gewählt, daß bei höhersiedenden Lösemitteln dieser Temperaturbereich eingehalten wird.

Im einfachsten Fall kann die azeotrope Destillation dadurch bewerkstelligt werden, daß man die Emulsion bei Raumtemperatur im offenen Gefäß während mehrerer Tage rührt. Im bevorzugten Fall wird die lösemittelhaltige Emulsion durch Vakuumdestillation von den Lösemitteln befreit.

Die abgedunstete oder abdestillierte Menge an Wasser und Lösemitteln werden zur Vermeidung von hohen Viskositäten durch Wasser ersetzt. Die Zugabe des Wassers kann vorher, nachher oder auch während des Abdunstens oder der Destillation durch portionsweise Zugabe erfolgen.

Nach Verlust der Lösemittel steigt die Glasübergangstemperatur Tg der dispergierten Teilchen an, und es bildet sich anstelle der bisherigen lösemittelhaltigen Emulsion eine Dispersion, d.h. die erfindungsgemäße Slurry, aus.

Die erfindungsgemäß zu verwendenden Salze können in unterschiedlicher Weise in die erfindungsgemäßen Slurries oder deren Vorstufen eingebracht werden. Beispielsweise können die Salze üblichen und bekannten Klarlack-Slurries zugesetzt werden, wodurch die erfindungsgemäßen Slurries resultieren. Sie können auch der organischen Lösung von Bestandteilen der erfindungsgemäßen Pulverslurry zugesetzt werden. Vorzugsweise werden sie vor dem Emulgieren der organischen Lösung im Wasser bzw. der wäßrigen Phase aufgelöst.

Gegebenenfalls werden die Partikel der erfindungsgemäßen Slurry im nassen Zustand mechanisch zerkleinert, was auch als Naßvermahlung bezeichnet wird. Vorzugsweise werden hierbei Bedingungen angewandt, daß die Temperatur des Mahlguts 70, bevorzugt 60 und insbesondere 50°C nicht überschreitet. Vorzugsweise beträgt der spezifische Energieeintrag während des Mahlprozesses 10 bis 1.000, bevorzugt 15 bis 750 und insbesondere 20 bis 500 Wh/g.

Für die Naßvermahlung können die unterschiedlichsten Vorrichtungen angewandt werden, die hohe oder niedrige Scherfelder erzeugen.

Beispiele geeigneter Vorrichtungen, die niedrige Scherfelder erzeugen, sind übliche und bekannte Rührkessel, Spalthomogenisatoren, Microfluidizer oder Dissolver.

Beispiele geeigneter Vorrichtungen, die hohe Scherfelder erzeugen, sind übliche und bekannte Rührwerksmühlen oder Inline-Dissolver.

Besonders bevorzugt werden die Vorrichtungen, die hohe Scherfelder erzeugen, angewandt. Von diesen sind die Rührwerksmühlen erfindungsgemäß besonders vorteilhaft und werden deshalb ganz besonders bevorzugt verwendet.

Generell wird bei der Naßvermahlung die erfindungsgemäße Slurry mit Hilfe geeigneter Vorrichtungen, wie Pumpen, den vorstehend beschriebenen Vorrichtungen zugeführt und im Kreis hierrüber gefahren, bis die gewünschte Teilchengröße erreicht ist.

Die erfindungsgemäße Slurry weist vorteilhafterweise einen Festkörpergehalt von 10 bis 60 Gew.-%, insbesondere von 20 bis 50 Gew.-%, auf.

Vorzugsweise wird die erfindungsgemäße Slurry vor ihrer Verwendung filtriert. Hierfür werden die üblichen und bekannten Filtrationsvorrichtungen und Filter verwendet, wie sie auch für die Filtration der bekannten Klarlack-Slurries in Betracht kommen. Die Maschenweite der Filter kann breit variieren und richtet sich in erster Linie nach der Teilchengröße und der Teilchengrößenverteilung der Partikel der erfindungsgemäßen Slurry. Der Fachmann kann daher die geeigneten Filter leicht anhand dieses physikalischen Parameters ermitteln. Beispiele geeigneter Filter sind Beutelfilter. Diese sind am Markt unter den Marken Pong® oder Cuno® erhältlich. Vorzugsweise werden Beutelfilter mit den Maschenweiten 25 bis 50 µm verwendet, beispielsweise Pong® 25 bis Pong® 50.

Zur Herstellung der erfindungsgemäßen Klarlackierungen wird die erfindungsgemäße Slurry auf das zu beschichtende Substrat appliziert. Hierbei brauchen keine besonderen Maßnahmen ergriffen zu werden, sondern die Applikation kann nach den üblichen und bekannten Verfahren erfolgen, was ein weiterer besonderer Vorteil der erfindungsgemäßen Slurry ist.

Nach ihrer Applikation trocknet die erfindungsgemäße Slurry problemlos auf und zeigt bei der Verarbeitungstemperatur, in der Regel bei Raumtemperatur, ein Verfilmen. D.h., die als Naßschicht applizierte erfindungsgemäße Slurry lüftet bei Raumtemperatur oder leicht erhöhten Temperaturen unter Wasserabgabe ab, wobei die darin enthaltenen Partikel ihre ursprüngliche Form verändern. Dadurch ist die Neigung zum "mudcracking" ausgesprochen gering.

In dem nachfolgenden Einbrennschritt wird die nun weitgehend wasserfreie Schicht zur Vernetzung gebracht. In manchen Fällen kann es von Vorteil sein, den Verlaufprozess und die Vernetzungsreaktion mit einem zeitlichen Versatz ablaufen zu lassen, indem ein Stufenheizprogramm oder eine sogenannte Aufheizrampe gefahren wird. Die für die vorliegenden Beispiele angemessene Vemetzungstemperatur liegt zwischen 120 und 160°C. Die entsprechende Einbrennzeit liegt zwischen 20 und 60 Minuten.

Im Falle der erfindungsgemäßen Dual-Cure-Slurry wird die thermische Härtung noch durch die Härtung mit aktinischer Strahlung ergänzt, wobei die üblichen und bekannten Strahlenquellen und Verfahren, wie sie beispielsweise in der deutschen Patentanmeldung DE 198 18 735 A1, Spalte 10, Zeile 31 bis Spalte 11, Zeile 22, beschrieben werden, angewandt werden können. Diese Verfahren und Vorrichtungen können auch für die Härtung der mit aktinischer Strahlung härtbaren erfindungsgemäßen Slurry angewandt werden.

Die hierbei resultierende Klarlackierung weist hervorragende anwendungstechnische Eigenschaften auf. So haftet sie fest auf allen üblichen und bekannten Basislackschichten oder auf Substraten wie Metall, Glas, Holz, Keramik, Stein, Beton oder Kunststoff. Sie ist von hohem Glanz, glatt, kratzfest, witterungsbeständig, chemikalienstabil und auch in hohem Schichtdicken frei von Störungen wie Spannungsrisse oder Kochern. Bei Belastung mit Feuchtigkeit zeigt sie kein Weißanlaufen mehr. Darüber hinaus ist sie frei von Mikrostörungen und zeigt keine störenden optischen Effekte, wie etwa einen dem Metallic-Effekt ähnelnden Sternenhimmel.

Wegen dieses vorteilhaften Eigenschaftsprofils ist die erfindungsgemäße Slurry hervorragend für die Automobilerstlackierung, die Automobilreparaturlackierung, die Lackierung von Bauwerken im Innen-und Außenbereich, die Lackierung von Türen, Fenstern und Möbeln sowie die industrielle Lackierung, inklusive Coil Coating, Container Coating, die Lackierung von Kleinteilen, die Imprägnierung und/oder Beschichtung elektrotechnischer Bauteile oder die Lackierung von weißer Ware, geeignet. Hierbei wird sie vor allem zur Herstellung von Klarlackierungen im Rahmen von farb- und/oder effektgebenden Mehrschichtlackierungen verwendet, die nach den üblichen und bekannten Naß-in-naß-Verfahren aus Basislacken und der erfindungsgemäßen Slurry hergestellt werden.

Bei dem Naß-in-naß-Verfahren kann die erfindungsgemäße Slurry problemlos mit zahlreichen Basislacken, insbesondere Wasserbasislacken, kombiniert werden, ohne daß Probleme, wie Rißbildung, mangelnde Benetzbarkeit und schlechte Zwischenschichthaftung, auftreten.

Die erfindungsgemäße Slurry kann überraschenderweise auch als Klebstoff für die Herstellung von Klebschichten und als Dichtungsmasse für die Herstellung von Dichtungen, insbesondere auf den vorstehend genannten technischen Gebieten, eingesetzt werden.

### Beispiele und Vergleichsversuche

### Herstellbeispiel 1

### Die Herstellung eines, erfindungsgemäß zu verwendenden Methacrylatcopolymerisats (Bindemittel)

39,75 Gewichtsteile Methylethylketon wurden in einem Reaktionsgefäß, ausgerüstet mit Rührer, Rückflußkühler, Ölheizung, Stickstoffeinleitungsrohr und zwei Zulaufgefäßen, vorgelegt und auf 78 °C aufgeheizt.

Hiernach wurde aus dem ersten Zulaufgefäß während 6,75 h eine Initiatorlösung aus 4 Gewichtsteilen Methylethylketon und 5 Gewichtsteilen TBPEH gleichmäßig zudosiert.

15 Minuten nach dem Beginn der Initiatordosierung wurde aus dem zweiten Zulaufgefäß eine Monomermischung aus 27,5 Gewichtsteilen n-Butylmethacrylat, 9,15 Gewichtsteilen i-Butylmethacrylat, 12,75 Gewichtsteilen Hydroxyethylmethacrylat und 0,6 Gewichtsteilen Methacrylsäure während 6 h gleichmäßig zudosiert. Anschließend wurde die Monomerleitung mit 0,25 Gewichtsteilen Methylethylketon und das Zulaufgefäß mit 0,5 Gewichtsteilen Methylethylketon gespült. Nach Beendigung des Initiatorzulaufs wurde das betreffende Zulaufgefäß ebenfalls mit 0,5 Gewichtsteilen Methylethylketon gespült.

Man ließ die Reaktionsmischung noch während 3 h bei 78 °C nachreagieren. Anschließend wurden die flüchtigen Anteile durch Vakuumdestillation entfernt, bis ein Festkörpergehalt von 70 Gew.-% eingestellt war. Danach wurde die Harzlösung ausgetragen. Sie wies eine Viskosität von 7,0 bis 10,0 dPas auf (Festharz 60prozentig in Xylol bei 23 °C). Die Säurezahl lag bei 9,0 bis 11,0 und die Hydroxylzahl bei 110 mg KOH/g Festharz.

### Herstellbeispiel 2

### Die Herstellung eines blockiertes Polyisocyanats auf der Basis von Hexamethylendiisocyanat

534 Gewichtsteile Desmodur® N 3300 (handelsübliches Isocyanurat von Hexamethylendiisocyanat der Firma Bayer AG) und 200 Gewichtsteile Methylethylketon wurden in einem Reaktionsgefäß vorgelegt und auf 40°C erhitzt. Zu der Lösung gab man unter Kühlung 100 Gewichtsteile 2,5-Dimethylpyrazol zu und wartete das Abklingen der exothermen Reaktion ab. Danach wurden bei fortgesetzter Kühlung erneut 100 Gewichtsteile 2,5-Dimethylpyrazol hinzugegeben. Nach erneutem Abklingen der exothermen Reaktion wurden weitere 66 Gewichtsteile 2,5-Dimethylpyrazol zugegeben. Danach wurde die Kühlung abgestellt, wodurch sich das Reaktionsgemisch langsam auf 80°C erwärmte. Man hielt es bei dieser Temperatur, bis sein Isocyanatgehalt auf unter 0,1% gesunken war. Danach wurde das Reaktionsgemisch gekühlt und ausgetragen.

Die resultierende Lösung des blockierten Polyisocyanats wies einen Festkörpergehalt von 81 Gew.-% (1 h bei 130°C) und eine Viskosität von 3,4 dPas (70%-ig in Methylethylketon; Platte-Kegel-Viskosimeter bei 23°C) auf.

### Beispiel 1

### Die Herstellung einer erfindungsgemäßen Slurry und einer erfindungsgemäßen Klarlackierung

961,6 Gewichtsteile der Methacrylatcopolymerisatlösung des Herstellbeispiels 1 und 484,5 Gewichtsteile der Lösung des blockierten Polyisocyanats des Herstellbeispiels 2 wurden bei Raumtemperatur in einem offenen Rührgefäß während 15 Minuten miteinander vermischt. Zu der resultierenden Mischung wurden 21,5 Gewichtsteile Tinuvin ® 400 und 10,7 Gewichtsteile Tinuvin ® 123 (handelsübliche Lichtschutzmittel der Firma Ciba Specialty Chemicals, Inc.) hinzugefügt, wonach die Mischung bei Raumtemperatur während 30 Minuten gerührt wurde. Anschließend wurden noch 1,15 Gewichtsteile Dibutylzinndilaurat und 4,01 Gewichtsteile Dimethylethanolamin hinzugefügt. Die resultierende Mischung wurde für weitere zwei Stunden bei Raumtemperatur gerührt.

Anschließend wurde sie mit 735,7 Gewichtsteilen deionisiertem Wasser, in dem 0,485 Gewichtsteile Ammoniumacetat (entsprechend 6,3 mmol/1.000 g Wasser) gelöst waren, in kleinen Portionen versetzt. Nach einer Pause von 15 Minuten wurden weitere 780 Gewichtsteile deionisiertes Wasser innerhalb von 30 Minuten gleichmäßig hinzugegeben.

Die resultierende wäßrige Emulsion wurde mit 739 Gewichtsteilen deionisiertem Wasser verdünnt. Hiernach wurde ihr an einem Rotationsverdampfer unter Vakuum die gleiche Menge eines Gemischs aus flüchtigen organischen Lösemitteln und Wasser entzogen, bis der Festkörpergehalt bei 37 Gew.-% lag (1 h bei 130°C).

Zur Einstellung der gewünschten Strukturviskosität wurden in die Klarlack-Slurry 90 Gewichtsteile Acrysol ® RM-8W (handelsüblicher nicht ionischer Assoziatiwerdicker der Firma Rohm & Haas) und 15 Gewichtsteile Byk ® 333 (handelsübliches Verlaufmittel der Firma Byk Chemie) eingerührt.

Zur Applikation der erfindungsgemäßen Slurry 1 wurde ein sogenannter integrierter Aufbau mit einem schwarzen Basislack vorbereitet.

Hierzu wurde auf mit handelsüblichem Elektrotauchlack kathodisch beschichteten Stahltafeln mit einer Becherpistole zunächst eine Funktionsschicht (Ecoprime®; BASF Coatings AG) appliziert. Nach 5-minütigem Ablüften bei Raumtemperatur wurde auf diese Schicht in gleicher Weise ein schwarzer Wasserbasislack (Ecostar®; BASF Coatings AG) appliziert und anschließend für 5 min bei 80°C vorgetrocknet.

Nach Abkühlen der Tafeln wurden in gleicher Weise die erfindungsgemäße Slurry 1 appliziert. Hiernach ließ man die Tafeln zunächst 5 min ablüften und anschließend 15 min lang bei 40°C vortrocknen. Dann wurden sie während 30 min bei 145°C eingebrannt.

Die applizierten Naßschichten waren so gewählt, daß nach dem Einbrennen die Trockenschichtdicken für die Funktionsschicht und den Wasserbasislack jeweils bei 15 µm lagen. Die erfindungsgemäße Klarlackierung 1 hatte eine Schichtdicke von 40 bis 45 µm.

Die erfindungsgemäße Klarlackierung 1 war hart, kratzfest, klar, brillant, chemikalien-, witterungs- und schwitzwasserbeständig sowie frei von Mikrostörungen, die einen dem Metallic-Effekt ähnlichen optischen Effekt (Sternenhimmel) hervorrufen.

### Vergleichsversuch V1

### Die Herstellung einer nicht erfindungsgemäßen Klarlack-Slurry und einer nicht erfindungsgemäßen Klarlackierung

Beispiel 1 wurde wiederholt, nur daß kein Ammoniumacetat zugesetzt wurde.

Die resultierende nicht erfindungsgemäße Klarlackierung war hart, kratzfest, klar, brillant, chemikalien-, witterungs- und schwitzwasserbeständig. Allerdings war sie nicht frei von Mikrostörungen. Diese riefen einen dem Metallic-Effekt ähnlichen optischen Effekt (Sternenhimmel) hervor.

## Patentansprüche

1. Strukturviskose Klarlack-Slurry, enthaltend feste und/oder hochviskose, unter Lagerungs- und Anwendungsbedingungen dimensionsstabile Partikel und mindestens ein wasserlösliches Salz, das rückstandsfrei oder im wesentlichen rückstandsfrei zersetzbar ist, wobei
das Ammoniumsalz aus der Gruppe bestehend aus Ammoniumcarbonat, Ammoniumrhodanid, Ammoniumsulfamat, Ammoniumsulfitmonohydrat, Ammoniumformiat, Ammoniumacetat, Ammoniumhydrogenoxalatmonohydrat, Diammoniumoxalatmonohydrat und Ammoniumcitrat, ausgewählt wird.

2. Strukturviskose Klarlack-Sturry nach Anspruch 1, **dadurch gekennzeichnet, daß** sie pro 1.000 g Wasser 0,1 bis 50 mmol des Salzes enhält.

3. Strukturviskose Klarlack-Slurry nach Anspruch 1 oder 2, **dadurch gekennzeichnet, daß** sie pro 1.000g Wasser 0,5 bis 8 mmol des Salzes enthält.

4. Strukturviskose Klarlack-Slurry nach einem der Ansprüche 1 bis 3, **dadurch gekennzeichnet, daß** das Ammoniumsalz aus der Gruppe, bestehend aus Ammoniumcarbonat und Ammoniumacetat ausgewählt wird.

5. Strukturviskose Klarlack-Slurry nach einem der Ansprüche 1 bis 4, **dadurch gekennzeichnet, daß** die Partikel eine mittlere Teilchengröße von 0,8 bis 20 µm und mindestens 99% der Teilchen eine maximale Teilchengröße von 30 µm haben.

6. Strukturviskose Klarlack-Slurry nach einem der Ansprüche 1 bis 5, **dadurch gekennzeichnet, daß** sie thermisch und/oder mit aktinischer Strahlung härtbar ist.

7. Strukturviskose Klarlack-Slurry nach einem der Ansprüche 1 bis 6, **dadurch gekennzeichnet, daß** sie von organischen Lösemitteln im wesentlichen oder völlig frei ist.

8. Strukturviskose Klarlack-Slurry nach einem der Ansprüche 1 bis 7, **dadurch gekennzeichnet, daß** sie durch
1) Emulgieren einer organischen Lösung von Bestandteilen der Klarlack-Slurry in Wasser, wodurch eine Emulsion vom Typ ÖI-in-Wasser resultiert,
2) Entfernen des organischen Lösemittels oder der organische Lösemittel und
3) teilweisen oder völligen Ersatz des entfernten Lösemittelvolumens durch Wasser
herstellbar ist.

9. Strukturviskose Klarlack-Slurry nach Anspruch 8, **dadurch gekennzeichnet, daß** das Salz vor dem Emulgieren 1) dem Wasser zugesetzt wird.

10. Verwendung der Klarlack-Slurry gemäß einem der Ansprüche 1 bis 9, für die Automobilerstlackierung, die Automobilreparaturlackierung, die Lakkierung von Türen, Fenstern und Möbeln sowie die industrielle Lackierung, inklusive Coil-Coating, Container-Coating, die Kleinteilelackierung, die Imprägnierung und/oder Beschichtung elektrotechnischer Bauteile und die Lackierung von weißer Ware.

11. Verwendung nach Anspruch 10, **dadurch gekennzeichnet, daß** die Klarlack-Slurry zur Herstellung von Klarlackierungen im Rahmen von farb-und/oder effektgebenden Mehrschichtlackierungen verwendet wird.

12. Verwendung der Klarlack-Slurry gemäß einem der Ansprüche 1 bis 11 als Klebstoff oder Dichtungsmasse zur Herstellung von Klebschichten und Dichtungen.

## Claims

1. Pseudoplastic clearcoat slurry comprising solid and/or highly viscous particles which are dimensionally stable under storage and application conditions and at least one water-soluble salt which can be decomposed without residue or virtually without residue, wherein the ammonium salt is selected from the group consisting of ammonium carbonate, ammonium thiocyanate, ammonium sulfamate, ammonium sulfite monohydrate, ammonium formate, ammonium acetate, ammonium hydrogen oxalate monohydrate, diammonium oxalate monohydrate and ammonium citrate.

2. Pseudoplastic clearcoat slurry according to Claim 1, **characterized in that** it contains from 0.1 to 50 mmol of salt per 1 000 g of water.

3. Pseudoplastic clearcoat slurry according to Claim 1 or 2, **characterized in that** it contains from 0.5 to 8 mmol of salt per 1 000 g of water.

4. Pseudoplastic clearcoat slurry according to any of Claims 1 to 3, **characterized in that** the ammonium salt is selected from the group consisting of ammonium carbonate and ammonium acetate.

5. Pseudoplastic clearcoat slurry according to any of Claims 1 to 4, **characterized in that** the particles have an average size of from 0.8 to 20 µm and at least 99% of the particles have a maximum size of 30 µm.

6. Pseudoplastic clearcoat slurry according to any of Claims 1 to 5, **characterized in that** it is curable thermally and/or with actinic radiation.

7. Pseudoplastic clearcoat slurry according to any of Claims 1 to 6, **characterized in that** it is substantially or entirely free from organic solvents.

8. Pseudoplastic clearcoat slurry according to any of Claims 1 to 7, **characterized in that** it is preparable by
1) emulsifying an organic solution of constituents of the clearcoat slurry in water to give an emulsion of the oil-in-water type,
2) removing the organic solvent or the organic solvents, and
3) replacing by water some or all of the volume of solvent removed.

9. Pseudoplastic clearcoat slurry according to Claim 8, **characterized in that** it is the salt is added to the water prior to the emulsification 1).

10. Use of the clearcoat slurry according to any of Claims 1 to 9 for automotive OEM finishing, automotive refinish, the coating of doors, windows and furniture, and industrial coating, including coil coating, container coating, the coating of small parts, the impregnation and/or coating of electrical components, and the coating of white goods.

11. Use according to Claim 10, **characterized in that** the clearcoat slurry is used to produce clearcoats as a part of multicoat color and/or effect paint systems.

12. Use of the clearcoat slurry according to any of Claims 1 to 11 as an adhesive or sealing compound for producing adhesive films and seals.

## Revendications

1. Suspension de laque claire à viscosité structurée, contenant des particules solides et/ou hautement visqueuses, présentant des dimensions stables dans les conditions d'entreposage et d'utilisation et au moins un sel soluble dans l'eau, qui est décomposable sans résidus ou essentiellement sans résidus, le sel d'ammonium étant choisi dans le groupe constitué par le carbonate d'ammonium, le thiocyanate d'ammonium, le sulfamate d'ammonium, le sulfite d'ammonium monohydraté, le formiate d'ammonium, l'acétate d'ammonium, l'hydrogénooxalate d'ammonium monohydraté, l'oxalate de diammonium monohydraté et le citrate d'ammonium.

2. Suspension de laque claire à viscosité structurée selon la revendication 1, **caractérisée en ce qu'**elle contient, par 1000 g d'eau, 0,1 à 50 mmoles du sel.

3. Suspension de laque claire à viscosité structurée selon la revendication 1 ou 2, **caractérisée en ce qu'**elle contient, par 1000 g d'eau, 0,5 à 8 mmoles du sel.

4. Suspension de laque claire à viscosité structurée selon l'une quelconque des revendications 1 à 3, **caractérisée en ce que** le sel d'ammonium est choisi dans le groupe formé par le carbonate d'ammonium et l'acétate d'ammonium.

5. Suspension de laque claire à viscosité structurée selon l'une quelconque des revendications 1 à 4, **caractérisée en ce que** les particules présentent une grosseur moyenne de particule de 0,8 à 20 µm et au moins 99% des particules présentent une grosseur maximale de particule de 30 µm.

6. Suspension de laque claire à viscosité structurée selon l'une quelconque des revendications 1 à 5, **caractérisée en ce qu'**elle est durcissable thermiquement et/ou avec un rayonnement actinique.

7. Suspension de laque claire à viscosité structurée selon l'une quelconque des revendications 1 à 6, **caractérisée en ce qu'**elle est essentiellement ou totalement exempte de solvants organiques.

8. Suspension de laque claire à viscosité structurée selon l'une quelconque des revendications 1 à 7, **caractérisée en ce qu'**elle peut être préparée par
1) émulsion d'une solution organique de constituants de la suspension de laque claire dans l'eau, avec formation d'une émulsion de type huile-dans-eau,
2) élimination du ou des solvants organiques et
3) remplacement partiel ou complet du volume de solvant éliminé par de l'eau.

9. Suspension de laque claire à viscosité structurée selon la revendication 8, **caractérisée en ce que** le sel est ajouté à l'eau avant l'émulsion 1).

10. Utilisation de la suspension de laque claire selon l'une quelconque des revendications 1 à 9, pour le laquage de base de voitures, le laquage de réparation de voitures, le laquage de portes, fenêtres et meubles ainsi que le laquage industriel, y compris le revêtement de bobines, le revêtement de conteneurs, le laquage d'accessoires, l'imprégnation et/ou le revêtement de pièces électrotechniques et le laquage de gros appareils ménagers.

11. Utilisation selon la revendication 10, **caractérisée en ce que** la suspension de laque claire est utilisée pour la production de laquages clairs dans le cadre des laquages à plusieurs couches conférant une teinte et/ou un effet.

12. Utilisation de la suspension de laque claire selon l'une quelconque des revendications 1 à 11 comme adhésif ou masse d'étanchéité pour la production de couches adhésives et de joints.
